Europäisches Patentamt

European Patent Office

Office européen des brevets

(11) Veröffentlichungsnummer: **0 363 577**

**A1**

## (12) EUROPÄISCHE PATENTANMELDUNG

(21) Anmeldenummer: **89112634.4**

(22) Anmeldetag: **11.07.89**

(51) Int. Cl.⁵: **G01C 9/10**

(30) Priorität: **29.09.88 DE 3833062**

(43) Veröffentlichungstag der Anmeldung:
**18.04.90 Patentblatt 90/16**

(84) Benannte Vertragsstaaten:
**BE CH FR GB IT LI NL**

(71) Anmelder: **Schmidt, Paul, Dipl.-Ing.**
**Reiherstrasse 1**
**D-5940 Lennestadt 1 (Saalhausen)(DE)**

(72) Erfinder: **Schmelzer, Robert**
**Dr.-Arnold-Strasse 49**
**D-5940 Lennestadt 1(DE)**

(74) Vertreter: **König, Reimar, Dr.-Ing. et al**
**Patentanwälte Dr.-Ing. Reimar König**
**Dipl.-Ing. Klaus Bergen Wilhelm-Tell-Strasse**
**14 Postfach 260162**
**D-4000 Düsseldorf 1(DE)**

(54) **Neigungswinkel-Messaufnehmer.**

(57) Neigungswinkel-Meßaufnehmer, insbesondere zum Messen eines Neigungswinkels von Versorgungsleitungen und/oder von Rammbohrgeräten (4), aus einem in einer Meßzelle (7) angeordneten Pendel und mindestens einem, die Auslenkung des Pendels messenden Wegaufnehmer (10). Das Pendel besteht aus einem sich auf einer kreisbogenförmigen Bahn in der Meßzelle (7) bewegenden Körper (11) mit einer Pendellänge gleich dem Bahnradius. Auf diese Weise läßt sich eine Pendellänge erreichen, die größer als der Durchmesser der Meßzelle (7) ist, um eine große Auslenkung des Körpers (11) bei gegebenem Winkel und damit eine große Meßempfindlichkeit und Meßgenauigkeit zu erreichen.

Fig. 2

EP 0 363 577 A1

## Neigungswinkel-Meßaufnehmer

Die Erfindung betrifft einen Neigungswinkel-Meßaufnehmer, insbesondere zum Messen des Neigungswinkels von Versorgungsleitungen und/oder Rammbohrgeräten, aus einem in einer Meßzelle angeordneten Pendel und mindestens einem, die Auslenkung des Pendels messenden Wegaufnehmer.

Ein derartiger Neigungswinkel-Meßaufnehmer ist in der "Zeitschrift für Kulturtechnik und Flurbereinigung" 16, Seite 296 bis 303 (1975) beschrieben. Bei diesem Neigungswinkel-Meßaufnehmer weist die Meßzelle eine mit Silikonöl gefüllte Kammer auf, in der ein Pendel etwa im Bereich des Scheitels der Kammer beweglich aufgehängt ist. Beiderseits des Pendels aus einem elektrisch leitfähigen, ferromagnetischen oder dauermagnetischen Werkstoff ist je ein induktiver Wegaufnehmer unter einem Winkel gegenüber der Längsachse des Neigungswinkel-Meßaufnehmers angeordnet, der etwa dem maximalen Winkelausschlag des Pendels entspricht. Die Meßzelle ist im Gehäuse des Neigungswinkel-Meßaufnehmers leicht drehbar aufgehängt, da sich das Pendel und sein Aufhängepunkt stets in der senkrechten Mittellängsebene der Meßzelle befinden müssen, unabhängig von der Lage des Aufnehmergehäuses, damit dieses sich während seiner Fortbewegung in einer Rohrleitung um die eigene Achse drehen kann.

Bei dieser Anordnung bleibt das Pendel stets in seiner senkrechten Lage, unabhängig davon, welche Winkellage der Meßaufnehmer einnimmt. Bei einer Neigung des Meßaufnehmers gegenüber dem Pendel verringert sich daher der Abstand des Pendels gegenüber dem einen induktiven Wegaufnehmer, während sich sein Abstand gegenüber dem anderen Wegaufnehmer vergrößert. Diese Abstandsveränderung ist ein Maß für die Winkellage des Meßaufnehmers und läßt sich anzeigen und/oder registrieren.

Die Anforderung dieses Meßaufnehmers an die Empfindlichkeit und die Genauigkeit, mit der die induktiven Wegaufnehmer den Pendelausschlag messen, sind sehr hoch, da die Pendellänge nur sehr gering sein kann und der Ausschlag des Pendels relativ zu den induktiven Wegaufnehmern proportional zu dem Winkel und zur Pendellänge sind. Es ergibt sich somit bei dem bekannten Meßaufnehmer, daß trotz eines verhältnismäßig großen apparativen Aufwandes nur eine verhältnismäßig geringe Genauigkeit der Messung erreichbar ist.

Ausgehend von der Überlegung, daß der lineare Ausschlag des Pendels umso größer wird, je größer die Pendellänge ist, liegt der Erfindung die Aufgabe zugrunde, bei einem Neigungswinkel-Meßaufnehmer der eingangs erwähnten Art eine ausreichend große Pendellänge ohne Vergrößerung des apparativen Aufwandes und daraus folgend eine Vergrößerung der Meßempfindlichkeit und -genauigkeit zu erreichen.

Die Lösung dieser Aufgabe basiert auf dem Gedanken, anstelle eines Pendels mit realer Länge, ein Pendel mit fiktiver Länge zu verwenden.

Gelöst wird diese Aufgabe bei einem Meßaufnehmer der eingangs erwähnten Art dadurch, daß das Pendel erfindungsgemäß aus einem sich in der Meßzelle auf einer kreisbogenförmig gekrümmten Bahn bewegenden Meßkörper besteht und die Pendellänge dem Bahnradius entspricht.

Der Meßkörper kann auf der kreisbogenförmigen Bahn gleiten oder vorzugsweise rollen und dann vorteilhafterweise aus einer Kugel bestehen, die frei beweglich in einem tonnenförmigen Bereich der aus einem Rohrstück bestehenden Meßzelle angeordnet ist. Der Radius der Wölbung des tonnenförmigen Bereichs entspricht dann der Pendellänge, die fast beliebig groß sein kann. Da der Radius der Wölbung des tonnenförmigen Bereichs praktisch nicht von der Größe der Meßzelle abhängt, läßt sich ein Radius wählen, der jedenfalls erheblich größer als der Durchmesser der Meßzelle ist, so daß schon eine geringe Winkelneigung des Meßaufnehmers zu einem großen Ausschlag der Kugel führt, der wiederum eine entsprechend große Meßwertänderung zur Folge hat. Da die Kontur des tonnenförmigen Bereichs in der Meßzelle rotationssymetrisch in bezug auf die Längsachse der Meßzelle ist und die induktiven Wegaufnehmer vorzugsweise in der Längsachse der Meßzelle angeordnet sind, hat eine Drehung des Meßaufnehmers um seine Längsachse keinerlei Einfluß auf das Meßergebnis. Wenn beispielsweise der erfindungsgemäße Meßaufnehmer in Verbindung mit einem Rammbohrgerät eingesetzt wird, kann sich das Rammbohrgerät beim Vortrieb ohne weiteres um seine Längsachse drehen, ohne daß hierdurch eine Verfälschung des Meßergebnisses eintritt.

Damit die induktiven Wegaufnehmer auf eine Verlagerung der Meßkugel ansprechen, besteht diese aus einem elektrisch leitfähigen, ferromagnetischen oder dauermagnetischen Werkstoff.

Um zu verhindern, daß sich die aus dem Betrieb des Rammbohrgeräts ergebenden Stöße auf das Meßergebnis auswirken, kann die Meßzelle mit einer Flüssigkeit, vorzugsweise mit Öl, beispielsweise Silikonöl gefüllt sein, dessen Viskosität sich mit der Temperatur nur wenig ändert.

Eine brauchbare Meßzelle, die den Anforderungen hinsichtlich der Meßempfindlichkeit und der Genauigkeit gerecht wird, ergibt sich; insbesondere wenn der Kugeldurchmesser etwa gleich dem Radius des größten Durchmessers des tonnenförmigen Bereichs ist, die axiale Ausdehnung des tonnenförmigen Bereichs etwa dem doppelten Kugeldurchmesser entspricht und sich an die Enden des tonnenförmigen Bereichs zylindrische Bohrungen anschließen, in denen die induktiven Wegaufnehmer angeordnet sind.

Die Erfindung wird nachstehend anhand eines in der Zeichnung dargestellten Ausführungsbeispiels des näheren erläutert. In der Zeichnung zeigen:

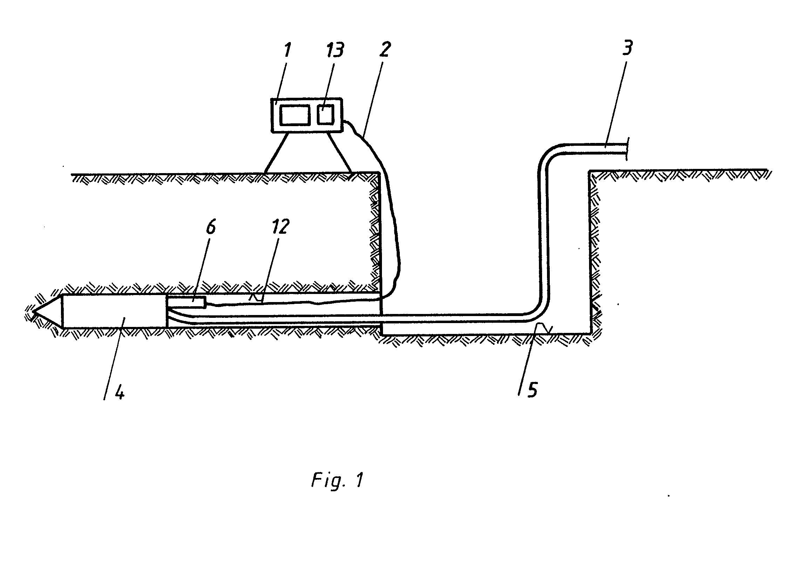

Fig. 1 eine schematische Ansicht eines Rammbohrgeräts in einem Erdkanal mit daran angeordnetem Meßaufnehmer und

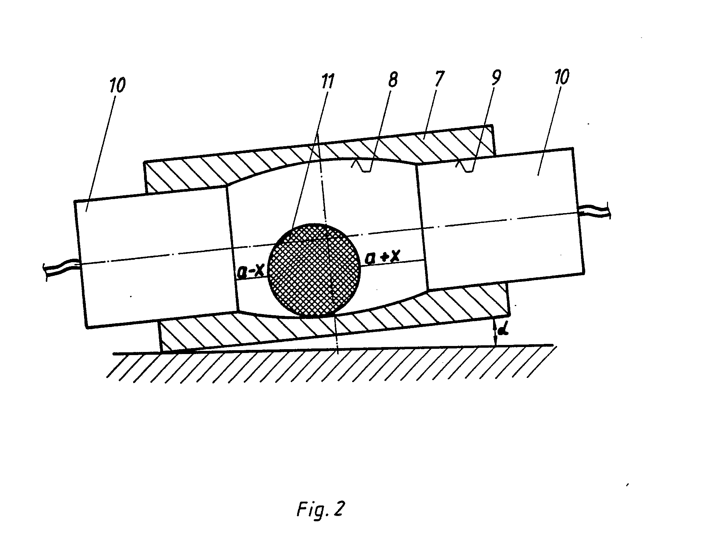

Fig. 2 einen schematischen Schnitt durch eine Meßzelle des Meßaufnehmers.

Ein Anzeige- und Meßregistriergerät 1 ist über ein Kabel 2 mit einem Neigungswinkel Meßaufnehmer 6 verbunden, der seinerseits an einem Rammbohrgerät 4 befestigt ist. Dieses Rammbohrgerät 4 wird mit über einen Druckluftschlauch 3 zugeführter Druckluft betrieben und stellt ausgehend von einer Grube 5 im Erdreich einen Kanal 12 her.

Mit Hilfe des Meßaufnehmers 6 sowie des Anzeige- und Registriergeräts 1 läßt sich die Winkellage des Rammbohrgeräts 4 gegenüber der Horizontalen ständig verfolgen und eine Abweichung von der vorgesehenen Bohrrichtung korrigieren.

Kern des Meßaufnehmers 6 ist eine Meßzelle 7 aus einem Rohrstück mit einem tonnenförmigen Bereich 8 und sich daran in Achsrichtung anschließenden zylindrischen Bohrungen 9. In dem tonnenförmigen Bereich ist eine Meßkugel 11 angeordnet. Eine durch einen Neigungswinkel α der Meßzelle 7 verursachte Verlagerung der Kugel 11 wird durch in den zylindrischen Bohrungen 9 beiderseits der Meßkugel 11 angeordnete induktive Wegaufnehmer 10 gemessen. Diese Verlagerung, die sich zu a - x gegenüber dem linken induktiven Wegaufnehmer und zu a + x gegenüber dem rechten induktiven Wegaufnehmer 10 ergibt, bewirkt eine Änderung der magnetischen Induktion des Systems Wegaufnehmer-Kugel und damit der elektrischen Eigenschaften der induktiven Wegaufnehmer 10. Mit einem Trägerfrequenzmeßverstärker 13 wird die Differenz der elektrischen Eigenschaften der beiden induktiven Wegaufnehmer 10 aufgenommen; sie ergibt im Anzeige- und Registriergerät 1 eine Anzeige, die eine Funktion des Neigungswinkels der Meßzelle und damit des Rammbohrgeräts 4 in der Bohrung 12 ist.

Da der Radius des tonnenförmigen Bereichs 8 größer als der Durchmesser der Meßzelle 7 sein kann, ergibt sich eine große Pendellänge und damit eine große Verlagerung der Kugel 11 für einen gegebenen Winkel α und daraus abgeleitet ein großes Meßsignal, das zu einer deutlichen und genauen Anzeige führt.

Die Empfindlichkeit des Meßaufnehmers 6 gegenüber Stößen läßt sich durch eine Silikonölfüllung des tonnenförmigen Bereichs 8 erreichen.

Die Kugel 11 kann aus elektrisch leitendem, ferromagnetischem oder dauermagnetischem Werkstoff bestehen, wenn induktive Wegaufnehmer 10 eingesetzt werden. Es eignen sich jedoch auch kapazitive Wegaufnehmer, die auf eine durch die Verlagerung der Kugel 11 verursachte Änderung eines elektrostatischen Feldes ansprechen.

## Ansprüche

1. Neigungswinkel-Meßaufnehmer, insbesondere zum Messen des Neigungswinkels von Versorgungsleitungen und/oder Rammbohrgeräten, aus einem in einer Meßzelle angeordneten Pendel und mindestens einem, die Auslenkung des Pendels messenden Wegaufnehmer, dadurch gekennzeichnet, daß das Pendel aus einem sich in der Meßzelle (7) auf einer kreisbogenförmigen Bahn (8) bewegenden Meßkörper (11) besteht und eine Pendellänge gleich dem Bahnradius besitzt.

2. Meßaufnehmer nach Anspruch 1, dadurch gekennzeichnet, daß die Meßzelle aus einem Rohrstück (7) mit einem tonnenförmigen Bereich (8) und das Pendel aus einer frei beweglichen Kugel (11) mit einer dem Radius der Wölbung des tonnenförmigen Bereichs (8) entsprechenden Pendellänge besteht.

3. Meßaufnehmer nach Anspruch 1 oder 2, gekennzeichnet durch einen Meßkörper (11) aus einem elektrisch leitfähigen Material und einen induktiven Wegaufnehmer (10).

4. Meßaufnehmer nach einem oder mehreren der Ansprüche 1 bis 3, dadurch gekennzeichnet, daß der Meßkörper (11) aus einem ferromagnetischen oder dauermagnetischen Werkstoff besteht.

5. Meßaufnehmer nach Anspruch 3, dadurch gekennzeichnet, daß je ein induktiver Meßaufnehmer (10) auf gegenüberliegenden Seiten des Meßkörpers (11) angeordnet ist.

6. Meßaufnehmer nach einem oder mehreren der Ansprüche 1 bis 5, dadurch gekennzeichnet, daß die Meßzelle (7) mit einer Flüssigkeit gefüllt ist.

7. Meßaufnehmer nach einem oder mehreren der Ansprüche 2 bis 6, dadurch gekennzeichnet, daß der Kugeldurchmesser etwa gleich dem Radius des größten Durchmessers des tonnenförmigen Bereichs (8) ist, daß die axiale Ausdehnung des tonnenförmigen Bereichs (8) etwa dem doppelten Kugeldurchmesser entspricht und daß sich an den tonnenförmigen Bereich (8) zylindrische Bohrungen (9) anschließen, in denen die induktiven Wegaufnehmer (10) angeordnet sind.

Fig. 1

*Fig. 2*

| | Europäisches Patentamt | **EUROPÄISCHER RECHERCHENBERICHT** | Nummer der Anmeldung |
|---|---|---|---|
| | | | EP 89 11 2634 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | FR-A-2 478 301 (ERAIN) <br> * Insgesamt * | 1-4,6 | G 01 C 9/10 |
| Y | | 7 | |
| | --- | | |
| X | EP-A-0 041 901 (BRISSONNEAU et al.) <br> * Figuren 1-3; Seite 4, Zeile 10 - Seite 5, Zeile 2 * | 1,5 | |
| Y | | 7 | |
| | --- | | |
| A | EP-A-0 254 188 (TDK) <br> * Zusammenfassung; Figur 2 * | 1,4 | |
| | ----- | | |
| | | | **RECHERCHIERTE SACHGEBIETE (Int. Cl.5)** |
| | | | G 01 C |

Der vorliegende Recherchenbericht wurde für alle Patentansprüche erstellt

| Recherchenort | Abschlußdatum der Recherche | Prüfer |
|---|---|---|
| DEN HAAG | 08-01-1990 | KOLBE W.H. |